# EUROPÄISCHE PATENTSCHRIFT

(11) **EP 0 960 378 B1**
(45) Veröffentlichungstag und Bekanntmachung des Hinweises auf die Patenterteilung: **18.07.2001**
(21) Anmeldenummer: 98910607.5
(22) Anmeldetag: 11.02.1998
(51) Int. Cl.: G06F 17/30

(54) **VERFAHREN ZUR GENERIERUNG EINES VERBUNDES VON IN EINER SEITENAUSZEICHNUNGSSPRACHE FORMATIERTEN SEITENDATEIEN**
METHOD FOR GENERATING A GROUP OF PAGE FILES FORMATTED IN A PAGE MARKUP LANGUAGE
PROCEDE POUR GENERER UN GROUPE DE FICHIERS DE PAGES FORMATES DANS UN LANGAGE DE BALISAGE DE PAGES

(30) Priorität: 13.02.1997 DE 19705526
(43) Veröffentlichungstag der Anmeldung: 01.12.1999
(73) Patentinhaber: SIEMENS AKTIENGESELLSCHAFT, 80333 München (DE)
(72) Erfinder: CRUSIUS, Friedbert, D-81669 München (DE)
(86) Internationale Anmeldenummer: DE9800380
(87) Internationale Veröffentlichungsnummer: WO9836367

(56) Entgegenhaltungen:
- HU J ET AL: "WEBINTOOL: A GENERIC WEB TO DATABASE INTERFACE BUILDING TOOL" PROCEEDINGS. INTERNATIONAL WORKSHOP ON DATABASE AND EXPERT SYSTEMS APPLICATIONS, 9.September 1996, Seiten 285-290, XP002036862
- LIU Y -H ET AL: "A DISTRIBUTED WEB SERVER AND ITS PERFORMANCE ANALYSIS ON MULTIPLE PLATFORMS" PROCEEDINGS OF THE 16TH. INTERNATIONAL CONFERENCE ON DISTRIBUTED COMPUTING SYSTEMS, HONG KONG, MAY 27 - 30, 1996, Nr. CONF. 16, 27.Mai 1996, INSTITUTE OF ELECTRICAL AND ELECTRONICS ENGINEERS, Seiten 665-672, XP000640221

## Beschreibung

Die Erstellung sowie die Pflege und Verfügbarkeit von Informationen, insbesondere von auf Systemabläufe und deren Veranschaulichung und Protokollierung bezogenen Informationen, gewinnen vor allem im Bereich der Industrie zunehmend an Bedeutung. Im Rahmen sogenannter Managementsysteme mit denen sämtliche produktbezogenen Abläufe und Strukturen in einem Betrieb oder Organisationseinheit definiert werden, ist es erforderlich, Änderungen in den bestehenden Abläufen, in ihrer Reihenfolge in 'ihrer Strukturierung sowie in Regelwerken und Themenbeschreibungen auf möglichst unkomplizierte Weise ausführen zu können und die geänderten oder neu erstellten Unterlagen als Dokumentenwerk für alle Mitarbeiter verfügbar zu machen.

Generell ist es dabei als vorteilhaft anzusehen, wenn bei der Erstellung eines neuen Dokumentenwerkes auf bestehende Dokumente oder Teile derselben zurückgegriffen werden kann. Z. B. können bzw. müssen Dokumente, die allgemein gültige Vorschriften beschreiben, die standardisierte bzw. betriebssystembedingte Vorgehensweisen definieren oder die eine bereits erstellte ähnliche Darstellungen enthalten, auch in einem neuen Dokumentenwerk enthalten sein.

Um diesen Anforderungen gerecht zu werden und um insbesondere geänderten oder neu erstellte Dokumentenwerke möglichst schnell den interessierten Personenkreisen verfügbar zu machen, ist eine datenverarbeitungstechnisch unterstützte Informationenerstellung und Speicherung sowie eine Datenübertragung über eine privates z.B. betriebsinternes Datennetz vorgeschlagen worden.

Aufgabe der vorliegenden Erfindung ist es, ein Verfahren anzugeben, mit dessen Hilfe ein strukturiertes Dokumentenwerk, aus bestehenden Dokumenten erstellt und bei geringer Belastung eines Datennetzes und geringem Speicherbedarf für einen möglichst großen Personenkreis zur Verfügung gestellt werden kann.

Gelöst wird diese Aufgabe erfindungsgemäß durch die Merkmale des Patentanspruchs 1.

Ein wesentlicher Vorteil des erfindungsgemäßen Verfahrens ist unter anderem in der physikalischen Trennung der vom Autor erstellten Originaldaten von den einem Benutzer über das Datennetzsystem zur Verfügung gestellten Lesedaten zu sehen. Das bedeutet insbesondere, daß von einem Benutzer die Originaldaten nicht überschrieben werden können. Das erfindungsgemäße Verfahren erlaubt zudem eine optimale Steuerung von Zugriffsrechten zwischen Autor und Benutzer.

Ein weiterer Vorteil des erfindungsgemäßen Verfahrens zeigt sich darin, daß durch die Entkopplung von Originaldaten und Lesedaten die Formatgeneratoreinrichtung wie ein Koppelglied wirkt, das unterschiedliche Hardwareplatformen als Basis zuläßt und von Hardwareeigentümlichkeiten weitgehend unabhängig macht.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen:
- Figur 1: eine schematische Darstellung eines Datennetzsystems mit Datenservereinrichtung
- Figur 2: eine symbolische Darstellung von in einem Autorensystem und in einer Servereinrichtung gespeicherten Dateien
- Figur 3: relevante Datenfelder bei der Erstellung einer Autorendatei
- Figur 4: eine von einer Formatgeneratoreinrichtung ausgeführte Registererstellung zu einer Datei insbesondere zur Ermittlung von Navigationssteueradressen.

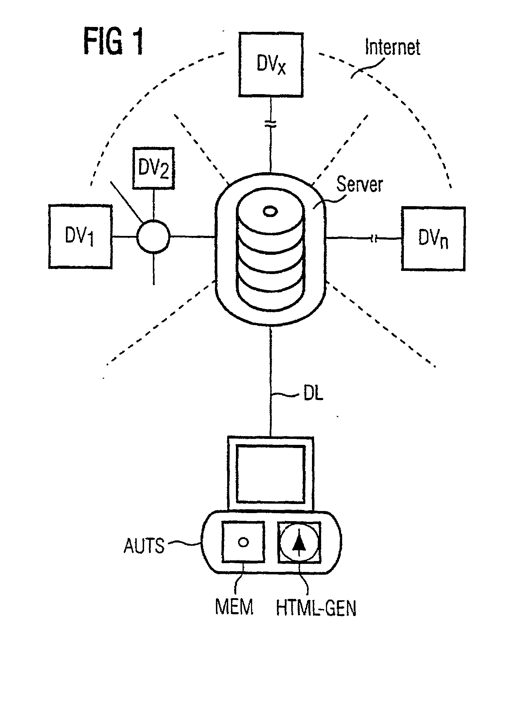

In Figur 1 ist stark vereinfacht ein Datennetzsystem INTERNET symbolisch dargestellt. Eine Vielzahl von DV-Benutzersystemen DV1, ... DVn sind unmittelbar oder unter Zwischenschaltung weiterer Datennetzsysteme mit einer Datenservereinrichtung SERVER verbindbar; ebenso ist ein DV-Autorensystem AUTS über eine Datenübertragungsleitung DL mit der Datenservereinrichtung SERVER verbunden. Als Datennetzsystem dient das weltweit verbreitete Internet/Intranet-System.

In der Datenservereinrichtung SEVER sind eine Vielzahl von Dokumenten gespeichert, die jeweils in sogenannte Seiten aufgeteilt sind. Ein in der Datenservereinrichtung SERVER gespeichertes Dokument ist von allen mit der Datenservereinrichtung SERVER über das Datennetzsystem INTERNET verbundenen d.h. an dieses angschalteten DV-Benutzersystemen DV1,...,DVn adressierbar.

Zur Visualisierung von Dokumenteninformationen an den DV-Benutzersystemen DV1, ...DVn werden in diesen Seitenzugriffseinrichtungen, sogenannte Browser benötigt, die eine Interpretation von in den Seiten enthaltenen Steueranweisungen ausführen und den Nutzinhalt an einer Anzeigeeinrichtung des DV-Benutzersystems - entsprechend den Steueranweisungen - ausgeben. Die Seiten sind in einer Seitenauszeichnungssprache, z.B. der bekannten Web-Sprache HTML, erstellt, deren Formatierungsoptionen im wesentlichen angeben, von welchem Rang eine Teilinformation innerhalb einer jeweiligen Seite ist. Die Seitenauszeichnungssprache erlaubt weiterhin mit Hilfe von in einer Seite hinterlegten sogenannten Tags Verweise (d.h. Adressen) zu anderen Seiten des Dokumentes anzugeben.

In dem DV-Autorensystem AUTS, das ebenso wie die einzelnen DV-Benutzersysteme DV1,...,DVn als Personalcomputer ausgebildet ist, befinden sich - als für die vorliegende Erfindung wesentliche Komponeneten - eine Speichereinrichtung MEM und eine programmtechnisch realisierte Formatgeneratoreinrichtung HTML-GEN.

Für das DV-Autorensystem AUTS ist in der Datenservereinrichtung. SERVER eine sogenannte 'Home Page' eingerichtet worden, die als Ziel für von dem DV-Autorensystem AUTS stammende Dokumente dient und von den DV-Benutzersystemen DV1,..,DVn als Einstiegsadresse für einen Zugriff auf die vom DV-Autorensystem AUTS erstellten Dokumente benutzt wird.

Standardmäßig verweist die 'Home Page' auf ein Inhaltsverzeichnis in dem die einzelnen Dokumente bzw. deren Inhaltsverzeichnisse angegeben sind. An jedem der DV-Benutzersystemen DV1,...,DVn kann mit Hilfe eines herkömmlichen Browsers über das Inhaltsverzeichnis von einer Seite in eine nächste oder andere Seite weitergeschaltet werden, was i.ü. relativ langer Wartezeiten bedarf und wodurch das Netzsystem erheblich belastet wird.

Nähere Informationen über das Internet/Intranet, die Web-sprache HTML, über Browser und sonstigen in Verbindung mit dem Datennetzsystem 'Internet' bekannten Einrichtungen sind aus der einschlägigen Literatur z.B. Russ Jones, Adrian Nye, "HTML und das World Wide Web", O'Reilly & Associates, Bonn, 1995 zu beziehen.

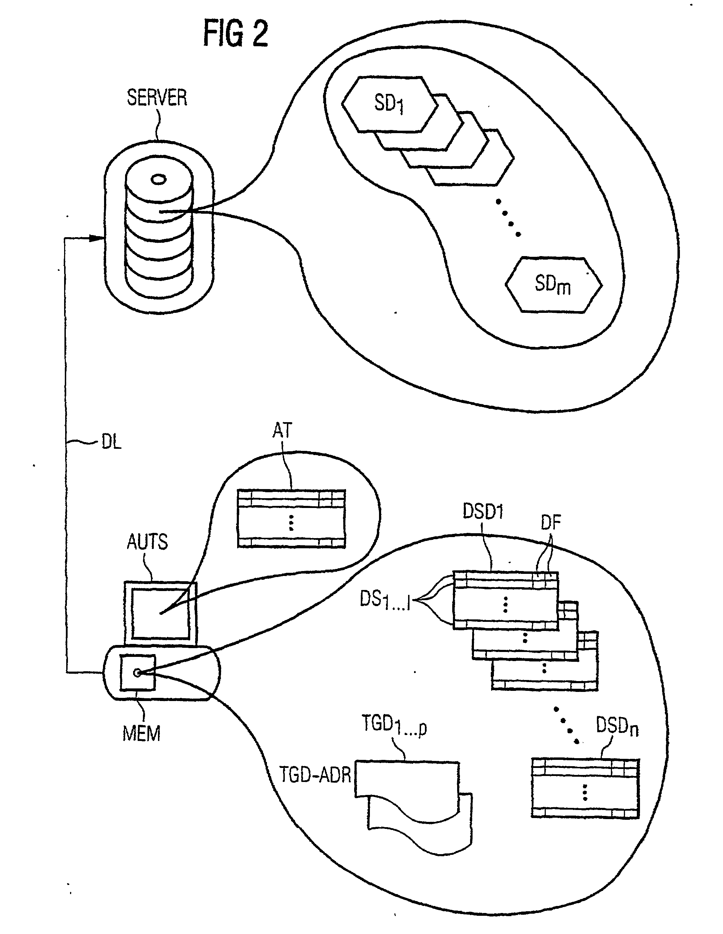

In Figur 2 sind die Datenservereinrichtung SEVER mit deren Speichermedium und das DV-Autorensystem AUTS mit dessen Speichereinrichtung MEM symbolisch dargestellt. Zudem sind Seitendateien SD1, ..., Sdm, die in HTML-Format im Speichermedium der Datenservereinrichtung SERVER gespeichert sind, veranschaulicht. Ebenso sind datensatzstrukturierte Dateien DSD1, ..., DSDn symbolisch darstellt, die in der Speichereinrichtung MEM gespeichert sind. Jede der datensatzstrukturierten Dateien besteht aus einer Vielzahl von Datensätzen DS1, ..., DS1, die ihrerseits in Datenfelder DF unterteilt sind. Die datensatzstrukturierten Dateien DSD1, ..., DSDn sind auch als Datenbanken oder Datenbankmodule zu verstehen. Zu diesen datensatzstrukturierten Dateien sind in der Speichereinrichtung MEM auch datensatzstruktur-freie Dateien PGD1, ..., PGDp gespeichert, die nicht datensatzstrukturiert sind oder eine Datensatzstruktur aufweisen, die sich von der gewählten Struktur der datensatzstrukturierten Dateien DSD1, ..., DSDn unterscheidet. Insbesondere können in den datensatzstruktur-freien Dateien PGD1, ..., PGDp reine Wort- und/oder Grafikdokumente enthalten sein.

Weiterhin ist in der Figur eine datensatzstrukturierte Autorendatei AT symbolisch dargestellt, deren Struktur mit derjenigen der datensatzstrukturierten Dateien DSD1, ..., DSDn übereinstimmt. Die Autorendatei AT wird am DV-Autorensystem AUTS erstellt und wird selbstverständlich auch in der Speichereinrichtung MEM gespeichert, insbesondere zwischengespeichert.

Zu jedem Datensatz DS1, ..., DS1 der datensatzstrukturierten Dateien DSD1, ...DSDn existiert im Speichermedium der Datenservereinrichtung SERVER, eine zugeordnete Seite, die im weiteren Seitendateien SD1, ..., Sdm genannt werden.
Im DV-Autorensystem AUTS kann auf jeden Datensatz DS1, ..., DSl anhand einer individuellen Datensatzadresse DS-ADR, die die Datensatzdatei und in dieser den betreffende Datensatz identifiziert, lesend und schreibend zugegriffen werden. Die Seitendateien SD1, ..., SDm haben eine individuelle HTML-Adresse HTML-ADR, unter der sie im Datennetzsystem bzw. In der Datenservereinrichtung SERVER adressierbar, d.h. auffindbar sind.

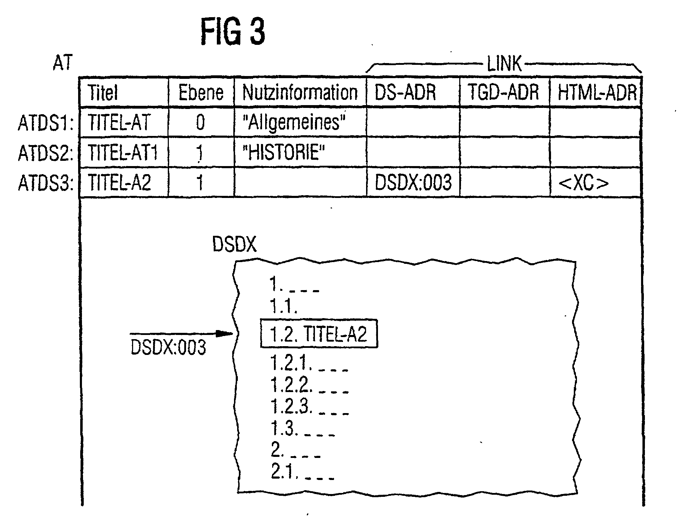

In Figur 3 ist die Erstellung einer Autorendatei AT am DV-Autorensystem AUTS mit Hilfe von Datensätzen und Datenfeldern der Autorendatei AT veranschaulicht. Insbesondere kann jeder der datensatzstrukturierten Dateien DSD1,...,DSDn als Autorendatei AT behandelt werden.

Beim Aufbau eines Dokumentenwerkes, das in der Autorendatei AT erstellt werden soll, ist für jedes Kapitel des Dokumentenwerkes, also für jeden Titel und Untertitel, ein neuer Datensatz vorzusehen und dementsprechend zu reservieren. Die Datensätze DS sind in eine Vielzahl von Datenfeldern DF unterteilt, von denen bei der Erstellung einige sichtbar, z.B. das Datenfeld 'TITEL' und das Datenfeld 'NUTZINFORMATION', die meisten aber für den Ersteller nicht sichtbar sind.

Beim vorliegenden Ausführungsbeispiel ist bei der Erstellung des Dokumentes in den ersten Datensatz - mit der Datensatzadresse ATDS1, die der Benutzer i.ü. nicht sieht - der Titel des ersten Kapitels vom Ersteller manuell eingegeben worden. Außerdem ist eine zu diesem Titel gehörende Nutzinformation in Form einer Text- oder Grafikinformation 'Allgemeines' innerhalb des gleichen Datensatzes vom Ersteller über die Tastatur eingegeben worden.

Auch der Titel des nächsten Unterkapitels sowie eine zugehörige Nutzinformation 'Historie' wurde von dem Ersteller über die Tastatur eingegeben. Der dadurch belegte Datensatz Ds hat die Datensatzadresse ATDS2.

Den Titel des zweiten Unterkapitels übernimmt der Ersteller aus einem Inhaltsverzeichnis der datensatzstrukturierten Datei DSDx, das er durch Selektieren der datensatzstrukturierten Datei DSDx in einem 'Fenster' auf dem Bildschirm des DV-Autorensystems AUTS angezeigt bekommt. Durch entsprechendes Markieren des gewünschten Kapitels - wie in der Fig durch Umrandung des Kapitels 1.2. angedeutet - und nach folgendem Bestätigen, wird der markierte Titel in den neuen Datensatz der Adresse ATDS3 übernommen, d.h. kopiert. Außerdem wird - für den Ersteller nicht sichtbar - die Datensatzadresse DS-ADR des markierten Kapitels und die HTML-Adresse HTML-ADR der Datenseite SD gespeichert, die dem Datensatz mit der Adresse DSDx:003 zugeordnet ist.

Durch das vorstehend erläuterte Übernehmen eines Titels aus einer der datensatzstrukturierten Dateien DSD1,...,DSDn werden auch die Unterkapitel zu dem selektierten Kapitel implizit mit in das neu zu erstellende oder zu bearbeitende Dokument übernommen.

Im übrigen kann anstelle einer explizit eingegebenen Nutzinformation auch eine Verweisadresse zu einer Text oder Grafikdatei z.B. einer der datensatzstruktur-freien Datei TGD1, ..., TGDp hinterlegt sein. Außerdem können auch bereits vorhandene Kapitel innerhalb der Autorendatei AT an einer anderen Stelle der Autorendatei AT auf die erläuterte Weise übernommen werden. Weiterhin kann auch eine (direkte) Adresse einer datensatzstruktur-freien Datei TGD übernommen werden, wobei in dieser aber eine Bezugnahme nicht vorgesehen ist.

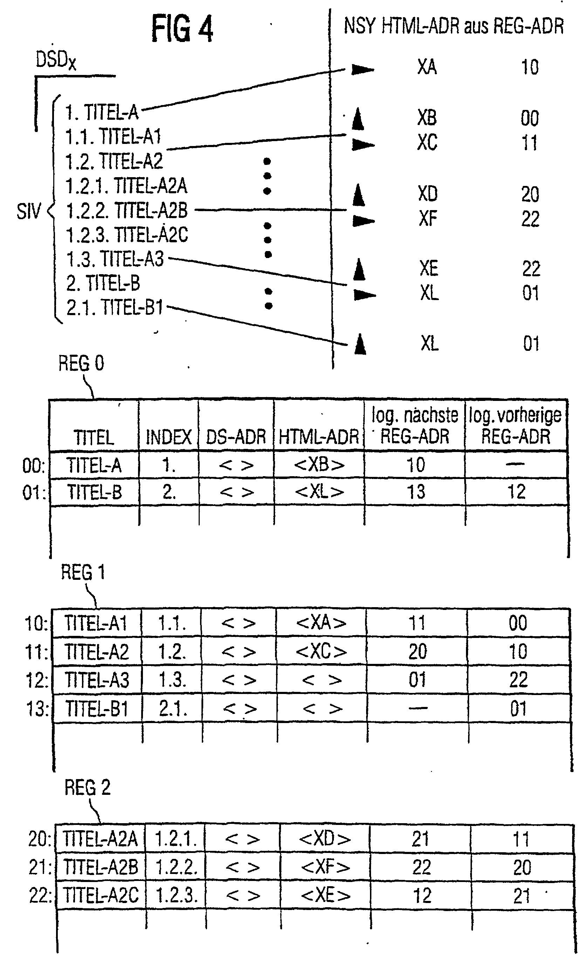

Nachdem vom Ersteller das gewünschte Dokument durch manuelle Eingabe und durch Bezugnahme auf bereits bestehende Kapitel zumindest in einem vorläufigen Rahmen fertiggestellt wurde, wird die Autorendatei AT der Formatgeneratoreinrichtung HTML-GEN zugeleitet. Von dieser wird beginnend mit dem ersten Datensatz, also bei der Datensatzadresse ATDS1 der Autorendatei AT ein strukturiertes Inhaltsverzeichnis (vgl. FIG 4 oben) erstellt und diejenigen Datensätze in HTML-Format umgesetzt, die noch nicht in diesem vorliegen (im folgenden Beispiel die ersten beiden Datensätze der Autorendatei AT). Außerdem wird eine Kopie der erzeugten HTML-Seitendateien über die Datenübertragungsleitung DL an die Datenservereinrichtung SERVER zur dortigen Abspeicherung übertragen. Die erstellte Autorendatei AT wird als neue datensatzstrukturierte Datei DSDn+1 in der Speichereinrichtung MEM des DV-Autorensystems abgespeichert.

In Figur 4 ist die Erstellung eines Inhaltsverzeichnisses veranschaulicht, wie es von der Formatgeneratoreinrichtung HTML-GEN bei einer in der Vergangenheit vorgenommenen Erstellung einer datensatzstrukturierten Datei z.B. DSDx aufbereitet wurde.

Für den Benutzer sichtbar ist ein von der Formatgeneratoreinrichtung HTML-GEN erstelltes Inhaltsverzeichnis mit Index und Titelangabe (in der Fig links oben), wobei der Index mehrstellig ist um eine gewünschte Strukturtiefe der Dokumentengliederung zum Ausdruck bringen zu können. In dieses sichtbare Inhaltsverzeichnis sind auch sämtliche Unterkapitel eines Kapitel, das durch Bezugsnahme - wie in Zusammenhang mit Figur 3 bezüglich des Kapitels 1.2. erläutert - integriert also übernommen worden.

Für den Ersteller nicht sichtbar ist der Aufbau von Registerdatensätzen REG0, ..., REG2, die insbesondere eine logische Reihenfolge der zu einem Dokument gehörenden Seitendateien SD1, ..., SDm protokollieren. Dies ist insbesondere dafür vorgesehen, das bei der Anzeige einer jeweiligen Seitendatei SDy an einem DV-Benutzersystem Dvx auf Navigationssymbole NSY darstellbar und vom Betrachter am DV-Benutzersystem aktivierbar sind um eine Fortschaltung (Weiterblättern) zur logische nächsten bzw. vorherigen Seite innerhalb der Struktur des Dokumentes zu ermöglichen. Die Navigationssymbole NSY sollen es dem Betrachter an einem DV-Benutzersystem insbesondere ermöglichen die in logischer Reihenfolge nächste oder. vorherige Seitendatei aufzurufen, ohne die Brouwserfunktion, die - wie bereits eingangs erwähnt - über das Inhaltsverzeichnis auf eine Seite zugreift, nicht aktivieren zu müssen.

Als Navigationssymbole NSY werden ein Pfeil nach rechts, wodurch ein Weiterschalten zur logisch nächsten Seite und ein Pfeil nach oben wodurch ein Zurückschalten zur vorherigen Seite symbolisiert wird, angezeigt. Den Navigationssymbolen NSY einer jeweiligen Seite zugeordnet sind die HTML-Adresse der im Dokument logisch nächsten Seite bzw. die HTML-Adresse der logisch vorhergehenden Seite gespeichert.

Zum raschen Ermitteln der logisch nächsten bzw. vorherigen Seitenadresse einer jeweiligen Seite werden die Registerdatensätze RG0, ..., RG2 von der Formatgeneratoreinrichtung HTML-GEN erstellt. Der erste Registerdatensatz RG0 weist zwei Sätze auf, in denen die Titel der hierarchisch höchsten Ebene (Ebene 0), also die Haupttitel des betreffenden Dokumentes gespeichert sind. Der Registerdatensatz RG1 enthält analog die Titel von in der nächst niedrigeren hierarchischen Ebene (Ebene 1) befindlichen Kapitel, und der Registerdatensatz REG2 enthält die Titel der hierarchischen Ebene 2.

Die Registerdatensätze REG0,...,REG2 haben neben einem Datenfeld für den Titel weitere Datenfelder z.B. für den für den Titel vergebenen Index, für die Datensatzadresse DS-ADR des zu dem Titel gehörenden Datensatzes DS in dem DV-Autorensystem AUTS und für die HTML-Adresse unter der diejenige Seitendatei SDy adressierbar ist, die zu dem betreffenden Titel gehört.

In einem weiteren ersten Datenfeld ist - sofern sinnvoll - die Adresse desjenigen Registersatzes angegeben, in dem der logisch nächste Titel gespeichert ist. In einem weiteren zweiten Datenfeld ist- sofern sinnvoll - die Adresse desjenigen Registersatzes angegeben, in dem der logisch vorhergehende Titel gespeichert ist. Die angegebenen Adressen dienen also als Verweis auf Datensätze der Registerdatensätze RG0, ..., RG2.

Ausgehend vom beispielhaft angegebenen hierarchischen Aufbau des im oberen linken Teil der Figur 4 dargestellten Inhaltsverzeichnises SIV und damit des Dokumentes, hat das erste Kapitel den Titel 'TITEL-A'. Die diesem logisch erste Datensatz der datensatzstrukturierten Datei DSDx zugordnete Seitendatei SDy ist gleichfalls die logisch erste Seitendatei des Dokumentes und ist unter der HTML-Adresse XB adressierbar. Der in logischer Reihenfolge nächste Titel gehört zum Kapitel 1.1. und ist aufgrund der niedrigeren hierarchischen Ebene im Registerdatensatz RG1 (unter der Adresse 10) gespeichert. Die zu diesem Titel (Titel-A1) gehörige Seitendatei SD ist unter der HTML-Adresse XA erreichbar.

Das in logischer Reihenfolge nächste Kapitel im Dokument trägt den Titel 'Titel-A2' und weist den Index 1.2. auf. Der Titel ist also aufgrund der gleichen hierarchischen Ebene wie der vorhergehende in dem Registerdatensatz REG1 (unter der Adresse 11) gespeichert. Der in logischer Reihenfolge sich anschließende Titel 'Titel-A2A' ist unter der Adresse 20 im Registerdatensatz REG2 (für die hierarchische Ebene 2) hinterlegt. Die zu diesem Titel (Titel-A2A) gehörige Seitendatei SD ist unter der HTML-Adresse XD adressierbar. Der in logischer Reihenfolge nächste Titel wiederum ist im gleichen Registerdatensatz REG2 unter der Adresse 21 (TITEL-A2B) zu finden. Der in logischer Reihenfolge vorherige Titel (zum Titel 'TITEL-A2A') ist im Registerdatensatz REG1 unter der Adresse 11 zu finden ist. Sind die Registerdatensätze REG0,...,REG2 in der gezeigten Art aufgebaut, dann können auf sehr schnelle und einfache Weise die Navigationssymbole NSY mit den entsprechenden HTML-Adressen für die logisch nachfolgende bzw. vorhergehende Seitendatei ermittelt und der betreffenden Seitendatei SD mitgegeben werden. Die HTML-Adressen der logisch nächsten und vorhergeheden Seitendateien werden also in die betreffende Seite eingetragen und dann als Bestandteil dieser an die Datenservereinrichtung SERVER übermittelt.

Im vorliegenden Beispiel ist in der Seite mit der HTML-Adresse XB nur ein Navigationssymbol NSY zur Weiterschaltung zur logisch nächsten Seitendatei, deren HTML-Adresse XA ist, hinterlegt. Ein Navigationssymbol zur vorherigen Seite fehlt, weil das Kapitel den Beginn des Dokumentes darstellt. In der Seitendatei SD mit der HTML-Adresse XA wird unter dem Navigationssymbol NSY zur nachfolgenden Seite die HTML-Adresse XC und zur vorhergehenden Seite die HTML-Adresse XB gespeichert. Zur Vermeidung einer Übertragung von Seitendateien, die bereits in der Datenservereinrichtung SERVER gespeichert sind, deren HTML-Adressen zum Adressieren einer logisch nächsten bzw. vorhergehenden Seitendatei SD aber geändert wurden, können die Registerdatensätze REG0,...,REG2 in der Datenservereinrichtung SERVER gespeichert sein, wobei die HTML-Adresse der logisch nächsten und vorherigen Seitendatei zu einer betreffenden Seitendatei über einen Verweis aus den Registerdatensätzen REG0,...,REG2 ermittelt wird.

## Patentansprüche

1. Verfahren zur Generierung eines Verbundes von in einer Seitenauszeichnungssprache (HTML) formatierten Seitendateien, für eine Speicherung in einer Datenservereinrichtung (Server) eines Datennetzsystemes (Internet/Intranet) über das die Seitendateien von einer Vielzahl von DV-Benutzersystemen (DV1, ..., DVn) adressierbar und an diese übermittelbar sind, wobei
- an einem mit der Datenservereinrichtung (Server) über eine Datenübertragungsleitung (DL) verbindbaren DV-Autorensystem (AUTS) eine datensatzstrukturierte Autorendatei erstellt wird, in der innerhalb eines jeweiligen Datensatzes Text-und Grafikinformationen editierbar und Bezugsinformationen (Titel) zu Datensätzen von im DV-Autorensystem (AUTS) adressierbaren datensatzstrukturierten Dateien einfügbar sind,
- die Autorendatei einer Formatgeneratoreinrichtung (HTML-GEN) des DV-Autorensystems (AUTS) zugeleitet wird, von der aus den Datensätzen der Autorendatei sowie aus den durch Bezugsinformationen (Titel) bezeichneten Datensätzen der datensatzstrukturierten Dateien jeweils eine zugeordnete Seitendatei in der Seitenauszeichnungssprache (HTML) erzeugt wird, wobei aus in den Datensätzen eingefügten Bezugsinformationen (Titel) jeweils eine die dem bezeichneteten Datensatz zugeordnete Seitendatei adressierende seitenauszeichnungssprachenspezifische Verknüpfungssteueradresse (HTML-Link) erzeugt wird und in der dem die Bezugsinformation (Titel) beinhaltenden Datensatz zugeordneten Seitendatei gespeichert wird,
- die derart erzeugten und mit seitenauszeichnungssprachenspezifischen Verknüpfungssteueradressen (HTML-Link) versehenen Seitendateien als Verbund über die Datenübertragungsleitung (DL) in die Datenservereinrichtung (Server) übertragen werden.

2. Verfahren nach Anspruch 1,
**dadurch gekennzeichnet,**
dass in Datensätzen der im DV-Autorensystem (AUTS) adressierbaren datensatzstrukturierten Dateien Bezugsinformationen (Titel) zu anderen Datensätzen von im DV-Autorensystem (AUTS) adressierbaren datensatzstrukturierten Dateien einfügbar sind.

3. Verfahren nach Anspruch loder 2,
**dadurch gekennzeichnet,**
dass in Datensätzen der datensatzstrukturierten Autorendatei Bezugsinformationen (Titel) zu anderen Datensätzen der datensatzstrukturierten Autorendatei einfügbar sind.

4. Verfahren nach einem der vorhergehenden Ansprüche,
**dadurch gekennzeichnet,**
dass die Autorendatei eine bereits im DV-Autorensystem (AUTS) adressierbare datensatzstrukturierte Datei ist.

5. Verfahren nach einem der vorhergehenden Ansprüche,
**dadurch gekennzeichnet,**
dass eine Bezugsinformation (Titel) zu im DV-Autorensystem (AUTS) adressierbaren datensatzfrei-strukturierten Dateien einfügbar ist.

6. Verfahren nach einem der vorhergehenden Ansprüche,
**dadurch gekennzeichnet,**
dass die in datensatzstrukturierten Dateien gespeicherte Information in Informationsmodule unterteilt ist, denen wenigstens eine individuelle Strukturadresse zugeordnet ist, dass jedes Informationsmodul zusammen mit seiner individuellen Strukturadresse in einem jeweiligen Datensatz gespeichert ist und
dass eine Bezugsinformation zu einem Datensatz einer Bezugsdatei dadurch eingefügt wird, dass mittels einer Visualisierung von in der Bezugsdatei eingerichteten Strukturadressen eine Selektierung einer derselben vornehmbar ist.

7. Verfahren nach einem der vorhergehenden Ansprüche,
**dadurch gekennzeichnet,**
dass bei Selektierung eines bereits in der Datenservereinrichtung als Seitendatei gespeicherten Datensatzes eine diese Seitendatei adressierende seitenauszeichnungssprachenspezifische Verknüpfungssteueradresse (HTML-Link) erzeugt und in einem Datenfeld des die Bezugsinformation (Titel) aufnehmenden Datensatzes zwischengespeichert wird.

8. Verfahren nach einem der vorhergehenden Ansprüche,
**dadurch gekennzeichnet,**
dass die Strukturadresse eine Textinformation (TITEL) oder eine Zifferninformation (Index) ist.

9. Verfahren nach einem der vorhergehenden Ansprüche,
**dadurch gekennzeichnet,**
dass eine datensatzstrukturierte Datei im DV-Autorensystem (AUTS) nur dann adressierbar ist, wenn die ihren Datensätzen zugeordneten Seitendateien bereits in der Datenservereinrichtung (Server) gespeichert sind und
dass eine Seitendatei nur dann übertragen wird, wenn sie noch nicht gespeichert ist, oder eine Änderung ihres Informationsinhaltes, insbesondere von Verknüpfungssteueradressen (HTML-Link) vorgenommen wurde.

10. Verfahren nach einem der vorhergehenden Ansprüche,
**dadurch gekennzeichnet,**
dass die gespeicherten Seitendateien (SD1, ..., SDm) bei den DV-Benutzersystemen (DV1, ..., DVn) mit Navigationssteuerfeldern angezeigt werden, die ein Weiterblättern im Verbund der Seitendateien zur logisch nächsten bzw. Vorhergehenden Seitendatei unter Umgehung einer Aktivierung entsprechender Weiterschaltefunktionen einer Seitenzugriffseinrichtung (Browser) bewirken.

## Claims

1. Method for generating a group of page files formatted in a page markup language (HTML), for storage in a data server device (server) of a data networking system (Internet/Intranet) through which the page files can be addressed by a multiplicity of DP user systems (DV1,...,DVn) and can be transferred to them,
- a data record-structured author file being drawn up on a DP authoring system (AUTS) which can be connected to the data server device (server) via a data transmission line (DL), in which author file text and graphic information can be edited within a respective data record and reference information (title) about data records of data record-structured files which can be addressed in the DP authoring system (AUTS) can be added,
- the author file being sent to a format generator device (HTML-GEN) of the DP authoring system (AUTS), by which an associated page file is in each case generated in the page markup language (HTML) from the data records of the author file and from the data records which belong to the data record-structured files and are marked by reference information (title), a page markup language-specific link control address (HTML link) addressing the page file associated with the marked data record being generated in each case from reference information (title) added to the data records and being stored in the page file associated with the data record containing the reference information (title),
- the page files generated in this way and provided with page markup language-specific link control addresses (HTML link) being transmitted to the data server device (server) via the data transmission line (DL).

2. Method according to Claim 1,
characterized in that reference information (title) about other data records of data record-structured files which can be addressed in the DP authoring system (AUTS) can be added to data records of the data record-structured files which can be addressed in the DP authoring system (AUTS).

3. Method according to Claim 1 or 2, characterized in that reference information (title) about other data records of the data record-structured author file can be added to data records of the data record-structured author file.

4. Method according to one of the preceding claims, characterized in that the author file is a data record-structured file which can already be addressed in the DP authoring system (AUTS).

5. Method according to one of the preceding claims, characterized in that an item of reference information (title) about files structured free of data records which can be addressed in the DP authoring system (AUTS) can be added.

6. Method according to one of the preceding claims, characterized in that the information stored in data record-structured files is subdivided into information modules to which at least one individual structure address is assigned, in that each information module is stored together with its individual structure address in a respective data record, and in that an item of reference information about a data record of a reference file is added in that, by means of visualization of the structure addresses filed in the reference file, it is possible to make a selection of one of the structure addresses.

7. Method according to one of the preceding claims, characterized in that when selecting a data record already stored in the data server device as a page file, a page markup language-specific link control address (HTML link) addressing this page file is generated and is temporarily stored in a data field of the data record holding the reference information (title).

8. Method according to one of the preceding claims, characterized in that the structure address is an item of text information (title) or an item of numerical information (index).

9. Method according to one of the preceding claims, characterized in that a data record-structured file in the DP authoring system (AUTS) can be addressed only if the page files assigned to its data records are already stored in the data server device (server), and wherein a page file is transmitted only if it is not yet stored or a change has been made to its information content, in particular of link control addresses (HTML link).

10. Method according to one of the preceding claims, characterized in that the stored page files (SD1,...,SDm) are displayed in the DP user systems (DV1,...,DVn) with navigation control fields which allow leafing through the group of page files to the logically next or preceding page file while avoiding activation of corresponding forward functions of a page access device (browser).

## Revendications

1. Procédé pour générer une interconnexion de fichiers de pages formatés en un langage (HTML) de balisage de pages, pour une mise en mémoire dans un dispositif (Server) de serveur de données d'un système de réseaux de données (Intemet/Intranet) par l'intermédiaire duquel les fichiers de pages d'une pluralité de systèmes (DV1, ...DVn) informatiques utilisateurs peuvent être adressés et peuvent être transmis à ces derniers,
- un fichier d'auteur, qui est structuré en ensembles de données, dans lequel des informations textuelles et des informations graphiques peuvent être éditées à l'intérieur d'un ensemble de données associé et dans lequel des informations de référence (Titel) se rapportant à des ensembles de données de fichiers structurés en ensembles de données, pouvant être adressés dans les systèmes (AUTS) informatiques d'auteur, peuvent être insérés, étant produit sur un système (AUTS) informatique d'auteur pouvant être relié au dispositif (Server) de serveur de données par l'intermédiaire d'une ligne (DL) de transmission de données,
- le fichier d'auteur étant envoyé à un dispositif (HTML-GEN) pour générer des formats du système (AUTS) informatique d'auteur par lequel est produit, à partir des ensembles de données du fichier d'auteur ainsi qu'à partir des ensembles de données désignés par des informations de référence (Titel) des fichiers structurés en ensembles de données, chaque fois un fichier de pages associé dans la langue (HTML) de balisage de pages, chaque fois une adresse (HTML-Link) de commande de combinaison spécifique au langage de balisage de pages et adressant le fichier de pages associé à l'ensemble de données désigné, étant produite et étant mémorisée dans le fichier de pages associé à l'ensemble de données contenant l'information de référence (Titel),
- les fichiers de pages ainsi produits et munis d'adresses (HTML-Link) de commande de combinaison spécifique au langage de balisage de pages étant transmis sous forme de compositions au dispositif (Server) de serveur de données par l'intermédiaire de la ligne (DL) de transmission de données.

2. Procédé suivant la revendication 1, caractérisé en ce qu'il peut être inséré dans des ensembles de données des fichiers structurés en ensembles de données, pouvant être adressés dans le système (AUTS) informatique d'auteur, des informations de référence (Titel) se référant à d'autres ensembles de données de fichiers structurés en ensembles de données, pouvant être adressés dans le système (AUTS) informatique d'auteur.

3. Procédé suivant la revendication 1 ou 2, caractérisé en ce qu'il peut être inséré dans des ensembles de données du fichier d'auteur structuré en ensembles de données des informations de référence (Titel) se rapportant à d'autres ensembles de données du fichier d'auteur structuré en ensembles de données.

4. Procédé suivant l'une des revendications précédentes, caractérisé en ce que le fichier d'auteur est un fichier structuré en ensembles de données, pouvant être adressé déjà dans le système (AUTS) informatique d'auteur.

5. Procédé suivant l'une des revendications précédentes, caractérisé en ce qu'il peut être insérée une information de référence (Titel) se rapportant à des fichiers structurés sans ensemble de données et pouvant être adressés dans le système (AUTS) informatique d'auteur.

6. Procédé suivant l'une des revendications précédentes, caractérisé en ce que l'information mémorisée dans des fichiers structurés en ensembles de données est répartie dans des modules d'informations auxquels est associée au moins une adresse individuelle de structure, en ce que chaque module d'informations est mémorisé conjointement avec son adresse individuelle de structure dans un ensemble de données associé et en ce qu'une information de référence se rapportant à un ensemble de données d'un fichier de référence est insérée par le fait que l'on peut effectuer au moyen d'une visualisation d'adresse de structure disposée dans le fichier de référence, une sélection de l'une de ces adresses de structure.

7. Procédé suivant l'une des revendications précédentes,
caractérisé en ce que, lors d'une sélection d'un ensemble de données mémorisé déjà dans le dispositif serveur de données comme fichier de pages, il est produit une adresse (HTML-Link) de commande de combinaison spécifique au langage de balisage de pages et adressant l'un de ces fichiers de pages, et cette adresse peut être mise en mémoire intermédiaire dans le champ de données de l'ensemble de données recevant l'information de référence (Titel).

8. Procédé suivant l'une des revendications précédentes, caractérisé en ce que l'adresse de structure est une information textuelle (TITEL) ou une information chiffrée (Index).

9. Procédé suivant l'une des revendications précédentes, caractérisé en ce qu'un fichier structuré en ensemble de données ne peut être adressé dans le système (AUTS) informatique d'auteur que si les fichiers de pages associés à ces ensembles de données sont déjà mémorisés dans le dispositif (Server) de serveur de données et en ce qu'un fichier de pages n'est transmis que s'il n'est pas encore mémorisé ou s'il a été effectué une modification de son contenu informationnel, notamment d'adresse (HTML-Link) de commande de combinaison.

10. Procédé suivant l'une des revendications précédentes, caractérisé en ce que les fichiers (SD1, ..., SDm) de pages mémorisés sont indiqués dans les systèmes (DV1, ..., DVn) informatiques utilisateurs par des champs de pilotage de navigation qui provoquent un feuilletage dans la composition des fichiers de pages vers le fichier de pages suivant ou précédent du point de vue logique en évitant une activation de fonction de suivi de connexion correspondante d'un dispositif d'accès aux pages (Browser).
